# DEMANDE DE BREVET EUROPEEN

(11) **EP 1 375 246 A1**
(43) Date de publication de la demande: **02.01.2004**
(21) Numéro de dépôt: 03291483.0
(22) Date de dépôt: 18.06.2003
(51) Int. Cl.: B60N 2/48, B60N 2/02, B60N 2/00

(54) **Procédé de positionnement en hauteur d'un appui-tête de siège de véhicule automobile**

(30) Priorité: 19.06.2002 FR 0207578
(71) Demandeur: Centre d'Etude et de Recherche pour l'Automobile ( CERA), 51100 Reims (FR)
(72) Inventeur: Albacete, Joan Manel, 17458 Fornells de la Selva, Girona (ES); Velasco Alfaro, Jose, 17458 Fornells de la Selva, Girona (ES)
(74) Mandataire: Geismar, Thierry

(57) **Abrégé**

L'invention concerne un appui-tête de siège de véhicule automobile, comprenant des moyens (8) de détection de la présence d'un passager sur ledit siège, des moyens moteurs (9) aptes à modifier la hauteur dudit appui-tête par rapport à des moyens de montage (3) de l'appui-tête sur ledit siège, et des moyens de commande (20) desdits moyens moteurs pour positionner ledit appui-tête en hauteur, lesdits moyens de commande étant aptes à actionner lesdits moyens moteurs pour amener l'appui-tête à une hauteur déterminée en cas de détection de la présence d'un passager sur le siège ou en position basse en cas d'absence d'une telle détection.

L'invention concerne également procédé de positionnement en hauteur d'un appui-tête mettant en oeuvre un tel appui-tête, ainsi qu'un véhicule automobile comprenant un tel appui-tête.

## Description

L'invention concerne un appui-tête de siège de véhicule automobile réglable en hauteur. L'invention a également pour objet un procédé de positionnement en hauteur d'un appui-tête de siège de véhicule automobile mettant en oeuvre un tel appui-tête, ainsi qu'un véhicule automobile comprenant un tel appui-tête.

On sait que les appuis-tête de siège de véhicules automobiles ont non seulement un rôle de confort, mais sont également essentiels dans le domaine de la sécurité. Ils sont particulièrement efficaces en cas de chocs arrière qui, en leur absence, et même à faible vitesse, peuvent entraîner des lésions graves au niveau des vertèbres cervicales.

C'est la raison pour laquelle la présence d'appuis-tête est obligatoire dans les véhicules automobiles. Toutefois, leur efficacité n'est assurée que s'ils sont positionnés à une certaine hauteur au-dessus de l'assise du siège. C'est pourquoi les normes n'imposent pas seulement la présence d'appuis-tête, mais également une hauteur minimale. Lorsque la hauteur de l'appui-tête est réglable, le réglage n'est donc possible qu'au-dessus de cette hauteur minimale de sécurité.

Il en résulte un certain nombre d'inconvénients.

Pour les véhicules du type coupé ou cabriolet ne disposant que de deux portes, il est nécessaire de basculer vers l'avant les dossiers des sièges avant de manière à dégager un passage pour l'accès aux places arrière. La hauteur minimale de l'appui-tête implique donc une hauteur minimale du pavillon du véhicule pour éviter toute interférence lors du basculement, ce qui impose des contraintes tant du point de vue aérodynamique qu'esthétique. Par ailleurs, l'angle de basculement vers l'avant des dossiers est d'autant plus limité par la venue en contact de l'appui-tête avec le volant de direction ou la planche de bord que le sommet de l'appui-tête est éloigné de l'axe de rotation du dossier.

Le problème de l'interférence de l'appui-tête avec le pavillon existe également pour les sièges arrière lorsque ceux-ci sont pliants.

Un autre type de problèmes est lié aux questions de visibilité, et donc également de sécurité. L'appui-tête du siège avant passager limite la vision de côté pour le conducteur. De même, les appuis-tête des sièges arrière occasionnent une gêne pour la rétrovision à travers la lunette arrière. Enfin, l'appui-tête du siège avant passager limite inutilement la vision vers l'avant des passagers arrière lorsque le siège avant passager est inutilisé, même si, ici, la sécurité n'est pas en cause.

La présente invention vise à pallier ces inconvénients.

Plus particulièrement, l'invention a pour but de fournir un appui-tête pour siège de véhicule automobile qui puisse être stocké dans une position plus basse que la hauteur minimale réglementaire lorsque le siège correspondant n'est pas occupé, tout en respectant les normes de sécurité lorsque le siège est occupé.

A cet effet, l'invention a tout d'abord pour objet un appui-tête de siège de véhicule automobile, comprenant des moyens de détection de la présence d'un passager sur ledit siège, des moyens moteurs aptes à modifier la hauteur dudit appui-tête par rapport à des moyens de montage de l'appui-tête sur ledit siège, et des moyens de commande desdits moyens moteurs pour positionner ledit appui-tête en hauteur, lesdits moyens de commande étant aptes à actionner lesdits moyens moteurs pour amener l'appui-tête à une hauteur déterminée en cas de détection de la présence d'un passager sur le siège ou en position basse en cas d'absence d'une telle détection.

On observera que l'appui-tête peut inclure l'ensemble des moyens de réglage, y compris les moyens moteurs, le détecteur de présence et les moyens de commande, par exemple un micro-contrôleur. L'appui-tête peut alors être supporté dans le dossier du siège par une ou plusieurs broches fixes par rapport à ce dossier, ce qui permet de supprimer les réglages mécaniques complexes inclus dans les dossiers de sièges de l'art antérieur. Les moyens de détection comprennent par exemple un détecteur à infrarouge. Ce détecteur peut être inclus dans la face avant de l'appui-tête. En variante, on peut utiliser un signal provenant d'un détecteur inclus dans l'assise du siège à d'autres fins. Cet appui-tête peut comprendre des moyens de réglage manuel de sa hauteur. Il peut également comprendre des moyens de mémorisation de la hauteur réglée.

L'invention a également pour objet un procédé de positionnement en hauteur d'un appui-tête de siège de véhicule automobile mettant en oeuvre un appui-tête tel que décrit ci-dessus comprenant les étapes consistant à :
- détecter la présence ou l'absence d'un passager sur ledit siège ;
- en cas de détection de la présence d'un passager, actionner des moyens moteurs pour amener l'appui-tête à une hauteur déterminée ; et
- en l'absence d'une telle détection, actionner lesdits moyens moteurs pour amener l'appui-tête en position basse de non utilisation.

Ainsi, si aucun passager n'est détecté sur le siège sur lequel l'appui-tête est monté, celui-ci est amené, ou laissé, à l'aide des moyens moteurs dans une position basse, qui peut être inférieure à une hauteur minimale de sécurité, où il occasionne le moins de gêne possible, tant pour la visibilité que pour le repliement du dossier du siège.

Si, au contraire, une présence est détectée sur le siège, les mêmes, ou d'autres, moyens moteurs amènent l'appui-tête dans une position d'utilisation, qui peut être déterminée selon différents critères.

Dans un premier mode de mise en oeuvre du procédé de l'invention, ladite hauteur déterminée est une hauteur d'utilisation préalablement mémorisée.

Ladite hauteur d'utilisation préalablement mémorisée peut par exemple être une hauteur minimale de sécurité, notamment une hauteur minimale imposée par des normes de sécurité.

Dans un autre mode de mise en oeuvre, le procédé de l'invention comprend une étape de réglage manuel de la hauteur de l'appui-tête et de mémorisation de la hauteur ainsi réglée.

Ces deux modes de mise en oeuvre peuvent d'ailleurs être combinés. Lors d'une première utilisation, l'appui-tête est amené automatiquement à une hauteur mémorisée en usine, correspondant à la hauteur minimale de sécurité. L'utilisateur peut alors régler manuellement la hauteur de l'appui-tête, mais uniquement en l'augmentant de manière à respecter la norme. Cette hauteur est alors mémorisée.

Lors des utilisations suivantes, dès la détection de la présence d'un passager, l'appui-tête est amené à la hauteur qui lui convient le mieux et qui a été précédemment mémorisée. S'il s'agit d'un autre utilisateur, il peut néanmoins de nouveau procéder à un réglage manuel de la hauteur, soit vers le haut soit vers le bas si l'appui-tête est à une hauteur supérieure à la hauteur minimale, soit uniquement vers le haut si l'appui-tête est à sa hauteur minimale. Cette nouvelle hauteur est alors mémorisée.

A l'exception de cas prédéterminés, dont certains seront décrits ci-après, les moyens moteurs ramènent l'appui-tête en position basse dès lors qu'aucune présence n'est détectée sur le siège.

Dans un mode de mise en oeuvre particulier de l'invention, ce procédé comprend la mémorisation d'une pluralité de hauteurs d'utilisation.

Il est ainsi possible d'adapter automatiquement la hauteur de l'appui-tête à un utilisateur particulier, parmi un ensemble d'utilisateurs ayant préalablement chacun réglé l'appui-tête à la hauteur qui lui est optimale. Cette adaptation peut être effectuée par la même sélection que celle qui permet, comme cela est connu, d'adapter l'ensemble des paramètres du siège, tels que la hauteur et la position longitudinale de l'assise et l'inclinaison du dossier, préalablement mémorisés, à un utilisateur particulier.

Egalement dans un mode de mise en oeuvre particulier, le procédé selon l'invention comprend l'étape consistant à détecter l'arrêt ou l'avance du véhicule, et à inhiber l'amenée de l'appui-tête en position basse de non utilisation en absence de détection de la présence d'un passager si l'avance du véhicule est détectée.

Cette caractéristique présente l'avantage d'éviter, lorsque le véhicule roule, que l'appui-tête revienne en position basse lorsque, le passager se penchant par exemple sur le côté, sa présence n'est plus détectée. En revanche, l'amenée en position d'utilisation n'est de préférence pas inhibée. Ainsi, si un passager change de siège, l'appui-tête du nouveau siège occupé, préalablement en position basse, est amené en position d'utilisation.

De même, le procédé selon l'invention peut comprendre l'étape consistant à détecter un état de verrouillage des portières du véhicule, et à inhiber l'amenée de l'appui-tête en position basse de non utilisation en cas de verrouillage des portières si la présence d'un passager est détectée.

Egalement dans un mode de mise en oeuvre particulier, le procédé selon l'invention comprend l'étape consistant à détecter l'inclinaison du siège, et à ramener l'appui-tête en position basse si cette inclinaison est supérieure à un seuil prédéterminé.

Ainsi, lorsque le dossier du siège est rabattu pour libérer l'accès aux places arrières dans un coupé ou un cabriolet, l'appui-tête est automatiquement amené dans sa position basse de non utilisation de manière à permettre au dossier le plus grand débattement angulaire possible.

Le procédé selon l'invention peut également comprendre l'étape consistant à détecter l'effort fourni par lesdits moyens moteurs, et à interrompre l'actionnement de ces moyens si cet effort est supérieur à un seuil prédéterminé.

On évite ainsi le risque de coincement d'une main entre le bord inférieur de l'appui-tête et la partie supérieure du dossier du siège, ou d'une tête entre le bord supérieur de l'appui-tête et le pavillon du véhicule.

Lorsque le véhicule est équipé de coussins de sécurité, on peut également prévoir l'étape consistant à détecter un état d'utilisation desdits coussins, et à inhiber lesdits moyens moteurs dans le cas où une utilisation a été détectée.

En effet, lors de certains accidents de la route, par exemple en cas de tonneau, le véhicule peut subir de fortes inclinaisons que le système pourrait interpréter comme un basculement du dossier conduisant à amener l'appui-tête en position basse. Or, de tels accidents entraînent toujours le déclenchement des coussins de sécurité. On peut donc utiliser le signal de déclenchement de ces coussins pour inhiber les moyens moteurs et éviter cet inconvénient.

On peut également prévoir l'étape consistant à détecter la hauteur de la tête du passager, ladite hauteur déterminée étant une hauteur optimale d'utilisation en fonction de la hauteur de la tête du passager.

Dans un mode de mise en oeuvre particulier, les différentes étapes sont répétées de façon cyclique.

Le système détecte donc en permanence l'état des différents paramètres pris en compte dans le procédé de manière à amener l'appui-tête soit en position basse soit en position d'utilisation en temps réel.

L'invention a également pour objet un véhicule automobile comprenant un appui-tête de siège tel que décrit ci-dessus.

D'autres objets et avantages de l'invention apparaîtront au cours de la description qui suit, faite en référence aux dessins annexés dans lesquels :
- La figure 1 est une vue schématique de côté de l'appui-tête selon l'invention, montrant le positionnement de cet appui-tête en fonction de la position de la tête du passager ;
- La figure 2 est une vue en coupe de l'appui-tête, montrant les différents moyens permettant son positionnement en hauteur selon le procédé de l'invention ;
- La figure 3 est une vue agrandie des moyens moteurs permettant de modifier la hauteur de l'appui-tête ;
- La figure 4 est une vue schématique en coupe de l'appui-tête, montrant d'autres moyens permettant son positionnement en hauteur selon le procédé de l'invention ;

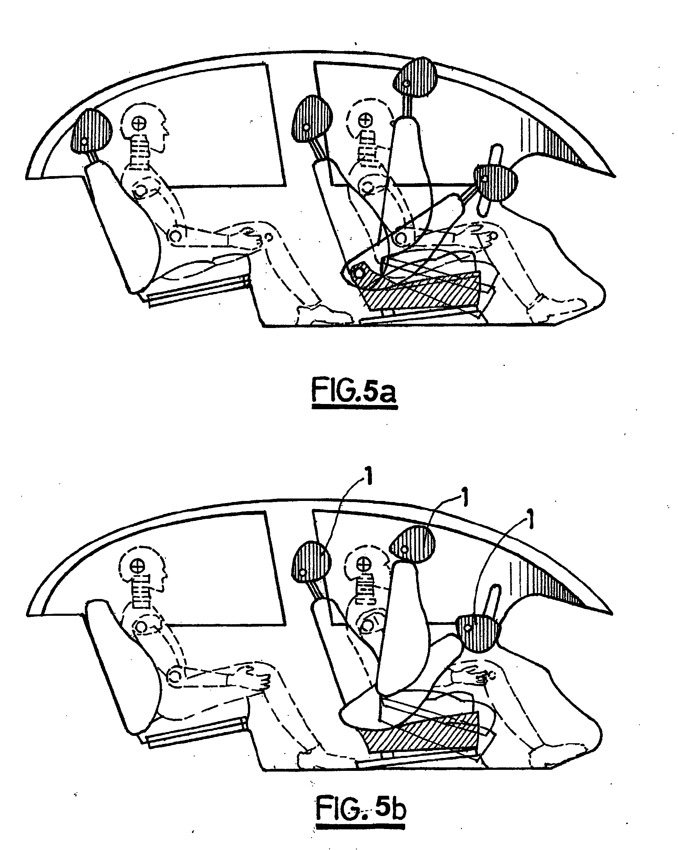

- Les figures 5a et 5b sont des vues schématiques de côté d'un habitacle de véhicule automobile comprenant un siège muni d'un appui-tête, ledit siège étant représenté incliné selon trois positions, le siège de la figure a étant muni d'un appui-tête classique, et le siège de la figure b étant muni d'un appui-tête selon l'invention ;
- La figure 6 illustre schématiquement la commande du réglage de hauteur d'un appui-tête selon l'invention ;
- Les figures 7a à 7c illustrent les différentes étapes de détection et de réglage en hauteur automatique d'un appui-tête selon un mode de réalisation de l'invention.

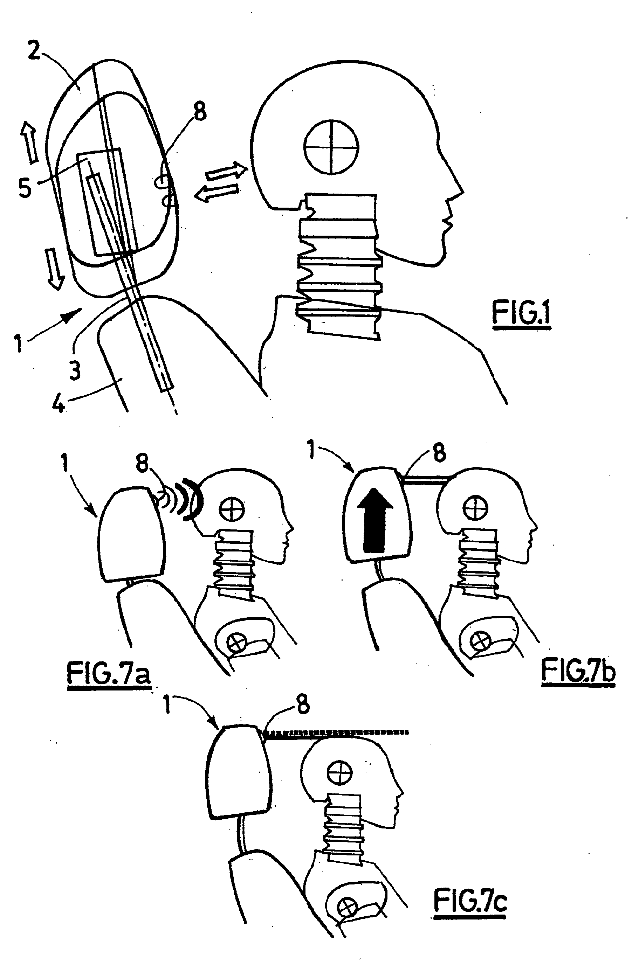

Le procédé selon l'invention est destiné à permettre le positionnement en hauteur d'un appui-tête 1 de siège de véhicule automobile, en fonction de la position de la tête du passager, comme représenté sur la figure 1.

Cet appui-tête 1 comprend de façon générale un coussin d'appui 2 monté à l'extrémité supérieure d'au moins une broche 3 dont l'autre extrémité pénètre dans le dossier 4 du siège.

Dans le mode de réalisation représenté, le coussin d'appui 2 est monté sur deux broches 3 fixes par rapport au dossier 4 du siège.

A l'intérieur du coussin 2 est prévu un boîtier 5 qui est percé à sa partie inférieure 6 de deux orifices 7 destinés chacun à recevoir une broche 3, et dans lequel sont placés les différents moyens permettant la mise en oeuvre du procédé selon l'invention.

Il s'agit de moyens de détection de la présence d'un passager sur le siège, de moyens moteurs aptes à modifier la hauteur de l'appui-tête 1 par rapport à des moyens de montage de l'appui-tête 1 sur ledit siège, et de moyens de commande desdits moyens moteurs pour positionner ledit appui-tête 1 en hauteur.

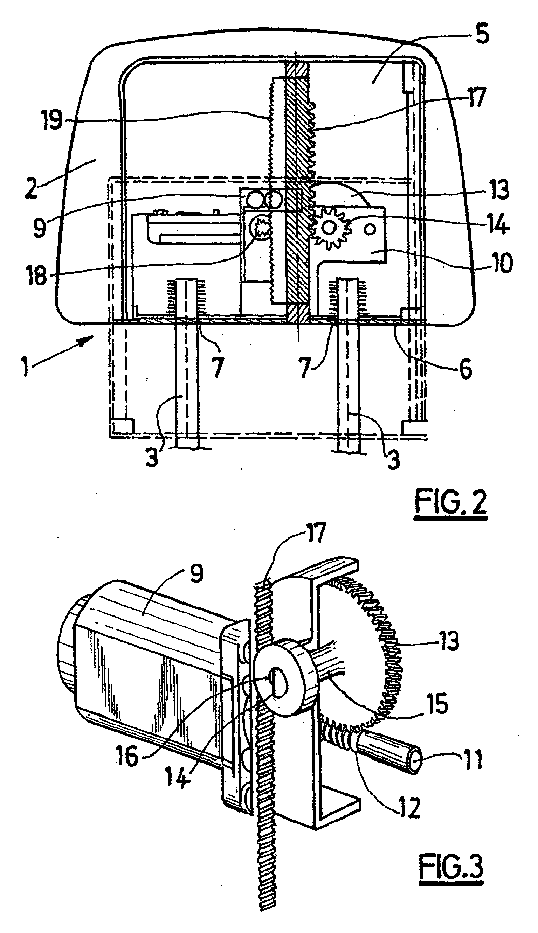

On décrit à présent ces différents moyens, en relation avec les figures 1 à 3.

Les moyens de détection de la présence d'un passager sur le siège comprennent un détecteur à infrarouge 8, de sorte à permettre, dès qu'un passager s'installe sur le siège, l'envoi immédiat d'un signal à des moyens de réception et de traitement dudit signal, constitués par exemple par un microcontrôleur 20.

L'information est alors transmise à un moteur 9 qui est monté sur une plaque 10 solidaire d'une des broches 3 de l'appui-tête, et dont l'arbre 11 comprend une vis sans fin 12.

Cette vis sans fin 12 est agencée pour entraîner la rotation d'une première roue dentée 13. Cette première roue dentée 13 est en contact avec une deuxième roue dentée 14 par l'intermédiaire d'une tige 15 dont une extrémité est fixée au centre de la première roue dentée 13, et dont l'autre extrémité est insérée dans un orifice 16 situé au centre de la deuxième roue dentée 14.

De la sorte, la rotation de la première roue dentée 13 dans un sens entraîne la rotation de la deuxième roue dentée 14 dans le même sens.

La deuxième roue dentée 14 est agencée pour s'engrener dans une crémaillère 17 solidaire du coussin d'appui 2.

Ainsi, par l'intermédiaire de la crémaillère 17, la rotation de la deuxième roue dentée 14 dans un sens entraîne la translation du coussin 2 vers le haut, et sa rotation dans l'autre sens entraîne la translation du coussin 2 vers le bas, de sorte à positionner l'appui-tête en hauteur.

En outre, l'appui-tête 1 comprend un dispositif de ralentissement de sa translation, de sorte à permettre son réglage en hauteur continu, sans à-coups. A cet effet, ce dispositif comprend une roue dentée 18 interagissant avec une crémaillère 19, ainsi qu'un liquide visqueux, par exemple une graisse, qui a pour fonction de ralentir la vitesse de rotation de la roue dentée 18.

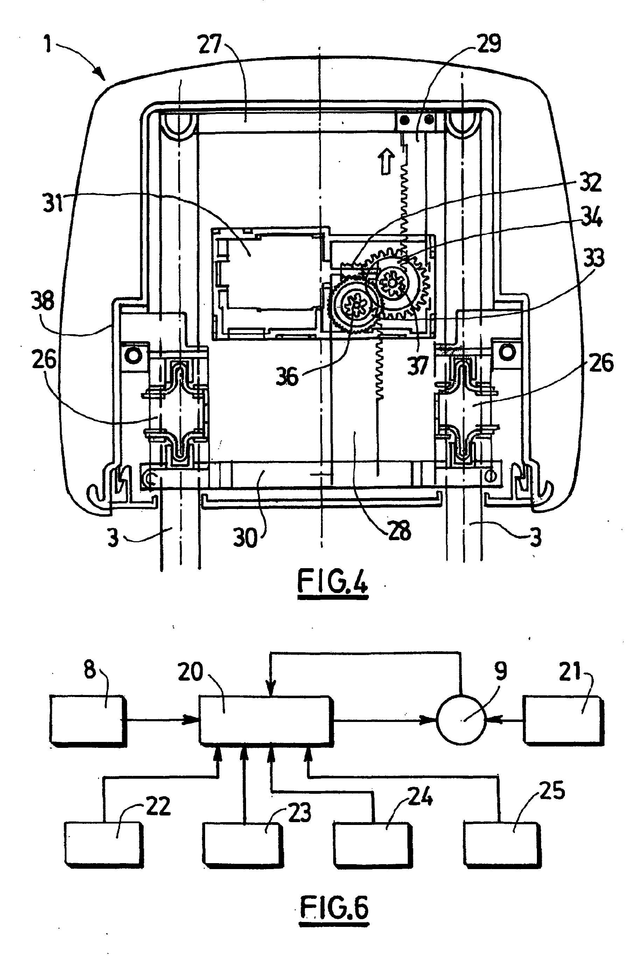

Selon une autre réalisation représentée figure 4, des gaines 26 sont prévues autour d'une partie des broches 3. Ces gaines 26 sont agencées de façon à ce que les broches 3 puissent coulisser à l'intérieur. Une barre 30 relie les deux gaines 26 et est solidaire d'une première crémaillère 28 s'étendant sensiblement parallèlement aux broches 3. Une tige 27 est fixée, au niveau de chacune de ses parties extrêmes, respectivement à la partie extrême supérieure des deux broches 3. Cette tige 27 est solidaire d'une deuxième crémaillère 29 s'étendant au moins en partie en regard de la première crémaillère 28.

Toujours selon le mode de réalisation représenté figure 4, un moteur 31 est prévu dont l'arbre 32 comprend une vis sans fin. Cette vis sans fin est agencée pour entraîner la rotation d'une première roue dentée 33 qui entraîne la rotation d'un rouage intermédiaire 36 coaxial de la première roue dentée 33. Ce rouage 36 engrène avec une deuxième roue dentée 34. Une petite roue dentée 37 coaxial à la deuxième roue dentée 34 engrène respectivement avec la première 28 et la deuxième 29 crémaillères de sorte que le mouvement des deux crémaillères se fasse dans des directions opposées.

Ainsi la rotation du moteur 31 entraîne la rotation de la première roue dentée 33 qui entraîne la rotation de la deuxième roue dentée 34 par l'intermédiaire du rouage 36. La deuxième roue dentée entraîne la rotation de la petite roue dentée 37. On crée ainsi un déplacement relatif des deux crémaillères 28 et 29, l'une allant vers le haut et l'autre vers le bas. La deuxième crémaillère 29 entraîne la tige 27 vers le haut ou vers le bas alors que la deuxième crémaillère est solidaire des gaines par l'intermédiaire de la barre 30. Ceci entraîne donc le coulissement des broches 3 dans leur gaine 26 et ainsi le déplacement, selon le sens de rotation du moteur 31, vers le haut ou vers le bas de l'appui-tête 1 par rapport au dossier du siège.

De plus, les gaines sont solidaires d'une coque 38 de l'appui-tête 1 à l'intérieur de laquelle l'ensemble des moyens de réglage est agencé. Ces gaines sont agencées par rapport à la coque de façon à permettre un mouvement pendulaire de l'appui-tête selon la direction longitudinale du véhicule automobile. L'utilisateur peut ainsi régler la position de l'appui-tête selon cette direction et approcher ou éloigner l'appui-tête

L'appui-tête 1 peut également comprendre un bouton d'actionnement 21 permettant son réglage en hauteur manuel, un détecteur d'inclinaison du siège 22, une connexion à un détecteur de mouvement du véhicule 23, une connexion à un détecteur 24 de déclenchement de coussin de sécurité, et une connexion à un détecteur 25 de l'état de verrouillage des portes, les fonctions respectives de ces moyens étant précisées dans la suite de la description.

On décrit à présent le procédé de positionnement en hauteur de l'appui-tête 1 décrit ci-dessus, ce procédé comprenant un certain nombre d'étapes répétées de façon cyclique.

Ce procédé comprend les étapes consistant à :
- détecter la présence ou l'absence d'un passager sur ledit siège à l'aide du détecteur 8;
- en cas de détection de la présence d'un passager, actionner des moyens moteurs 9 pour amener l'appui-tête 1 à une hauteur déterminée ; et
- en l'absence d'une telle détection, actionner ces moyens moteurs pour amener l'appui-tête 1 en position basse de non utilisation.

Le détecteur 8 fournit les informations qu'il recueille au microcontrôleur 20 qui commande par tous moyens connus le moteur 9.

La hauteur déterminée précitée est, dans le cas présent, lors de la première utilisation du dispositif, une hauteur d'utilisation préalablement mémorisée, et plus précisément une hauteur minimale imposée par des normes de sécurité.

L'utilisateur peut alors régler manuellement la hauteur de l'appui-tête, à l'aide du bouton d'actionnement 21 qui commande directement le moteur 9. Ce réglage ne peut toutefois s'effectuer que vers le haut de manière à respecter la norme. La hauteur choisie est alors mémorisée par le microcontrôleur 20.

Lors des utilisations suivantes, dès la détection de la présence d'un passager, l'appui-tête est amené à la hauteur qui lui convient le mieux et qui a été précédemment mémorisée. S'il s'agit d'un autre utilisateur, il peut néanmoins de nouveau procéder à un réglage manuel de la hauteur à l'aide du bouton 21, soit vers le haut soit vers le bas si l'appui-tête est à une hauteur supérieure à la hauteur minimale, soit uniquement vers le haut si l'appui-tête est à sa hauteur minimale. Cette nouvelle hauteur est alors mémorisée.

On peut également prévoir la mémorisation d'une pluralité de hauteurs d'utilisation par le microcontrôleur 20.

Lorsqu'un passager s'installe sur le siège, il sélectionne par des moyens convenables celle des hauteurs qui lui convient et qu'il a précédemment mémorisée.

Selon une réalisation représentée sur les figures 7a à 7c, le réglage en hauteur de l'appui-tête 1 est adapté automatiquement à la taille de l'utilisateur présent sur le siège.

Selon cette réalisation, les moyens de détection de la présence d'un passager sur le siège comprennent deux détecteurs à infrarouge 8 disposés l'un au dessus de l'autre. Le réglage optimal de la hauteur de l'appui-tête 1 est réalisé lorsque le détecteur situé en dessous détecte la présence du passager et lorsque celui du dessus ne la détecte pas, comme représenté figure 7c par un trait plein pour le détecteur du dessous et par un trait en pointillé pour le détecteur du dessus.

Ainsi, on prévoit de faire monter l'appui-tête 1 si les deux détecteurs 8 détectent la présence du passager, comme représenté sur la figure 7b par les deux traits pleins, ou de le faire descendre si aucun des deux détecteur ne détecte la présence du passager.

A l'exception des cas décrits ci-après, les moyens moteurs 9 ramènent l'appui-tête 1 en position basse dès lors qu'aucune présence n'est détectée sur le siège.

On détecte également l'arrêt ou l'avance du véhicule à l'aide du détecteur 23, et on inhibe l'amenée de l'appui-tête en position basse de non utilisation en absence de détection de la présence d'un passager si l'avance du véhicule est détectée.

De même, on détecte un état de verrouillage des portières du véhicule à l'aide du détecteur 25, et on inhibe l'amenée de l'appui-tête 1 en position basse de non utilisation en cas de verrouillage des portières si la présence d'un passager est détectée par le détecteur 8.

Si la présence du passager n'est plus détectée, l'appui-tête 1 commence à être amené en position basse de non utilisation. Si la présence d'un passager est à nouveau détectée pendant la descente de l'appui-tête, celui-ci retourne en position d'utilisation. Au contraire, si aucune présence n'est détectée et que l'appui-tête arrive en position basse de non utilisation, le réglage en position d'utilisation de l'appui-tête ne se fera qu'une fois que l'on détecte un état de déverrouillage des portières du véhicule et la présence d'un passager sur le siège.

On détecte également l'inclinaison du siège à l'aide du détecteur 22, et on ramène l'appui-tête en position basse si cette inclinaison est supérieure à un seuil prédéterminé.

On détecte également l'effort fourni par le moteur 9, par exemple en mesurant le courant dans ses enroulements, et on interrompt l'alimentation du moteur si cet effort est supérieur à un seuil prédéterminé.

Le véhicule est ici équipé de coussins de sécurité. On détecte un état d'utilisation de ces coussins à l'aide du détecteur 24, et on inhibe les moyens moteurs dans le cas où une utilisation a été détectée.

L'homme de métier saura programmer le microcontrôleur 20 de manière à lui permettre d'assumer les fonctions ci-dessus.

Le système détecte donc en permanence l'état des différents paramètres pris en compte dans le procédé de manière à amener l'appui-tête soit en position basse soit en position d'utilisation en temps réel.

## Revendications

1. Appui-tête de siège de véhicule automobile, **caractérisé par le fait qu'**il comprend des moyens (8) de détection de la présence d'un passager sur ledit siège, des moyens moteurs (9) aptes à modifier la hauteur dudit appui-tête par rapport à des moyens de montage (3) de l'appui-tête sur ledit siège, et des moyens de commande (20) desdits moyens moteurs pour positionner ledit appui-tête en hauteur, lesdits moyens de commande étant aptes à actionner lesdits moyens moteurs pour amener l'appui-tête à une hauteur déterminée en cas de détection de la présence d'un passager sur le siège ou en position basse en cas d'absence d'une telle détection.

2. Appui-tête selon la revendication 1, dans lequel lesdits moyens de détection comprennent au moins un détecteur à infrarouge.

3. Appui-tête selon la revendication 2, dans lequel lesdits moyens de détection (8) comprennent deux détecteurs à infrarouge agencés l'un au dessus de l'autre.

4. Appui-tête selon l'une quelconque des revendications 1 à 3, comprenant des moyens (21) de réglage manuel de sa hauteur.

5. Appui-tête selon la revendication 4, comprenant des moyens (20) de mémorisation de la hauteur réglée.

6. Procédé de positionnement en hauteur d'un appui-tête de siège de véhicule automobile selon l'une quelconque des revendications 1 à 5, **caractérisé par le fait qu'**il comprend les étapes consistant à :
- détecter la présence ou l'absence d'un passager sur ledit siège ;
- en cas de détection de la présence d'un passager, actionner des moyens moteurs pour amener l'appui-tête à une hauteur déterminée ; et
- en l'absence d'une telle détection, actionner lesdits moyens moteurs pour amener l'appui-tête en position basse de non utilisation.

7. Procédé selon la revendication 6, dans lequel ladite hauteur déterminée est une hauteur d'utilisation préalablement mémorisée.

8. Procédé selon la revendication 7, dans lequel ladite hauteur d'utilisation préalablement mémorisée est une hauteur minimale de sécurité.

9. Procédé selon l'une quelconque des revendications 6 à 8, comprenant une étape de réglage manuel de la hauteur de l'appui-tête et de mémorisation de la hauteur ainsi réglée.

10. Procédé selon la revendication 9, comprenant la mémorisation d'une pluralité de hauteurs d'utilisation.

11. Procédé selon l'une quelconque des revendications 6 à 10, comprenant l'étape consistant à détecter l'arrêt ou l'avance du véhicule, et à inhiber l'amenée de l'appui-tête en position basse de non utilisation en absence de détection de la présence d'un passager si l'avance du véhicule est détectée.

12. Procédé selon l'une quelconque des revendications 6 à 11, comprenant l'étape consistant à détecter un état de verrouillage des portières du véhicule, et à inhiber l'amenée de l'appui-tête en position basse de non utilisation en cas de verrouillage des portières si la présence d'un passager est détectée.

13. Procédé selon l'une quelconque des revendications 6 à 12, comprenant l'étape consistant à détecter l'inclinaison du siège, et à ramener l'appui-tête en position basse si cette inclinaison est supérieure à un seuil prédéterminé.

14. Procédé selon l'une quelconque des revendications 6 à 13, comprenant l'étape consistant à détecter l'effort fourni par lesdits moyens moteurs, et à interrompre l'actionnement de ces moyens si cet effort est supérieur à un seuil prédéterminé.

15. Procédé selon l'une quelconque des revendications 6 à 14, pour véhicule équipé de coussins de sécurité, comprenant l'étape consistant à détecter un état d'utilisation desdits coussins, et à inhiber lesdits moyens moteurs dans le cas où une utilisation a été détectée.

16. Procédé selon la revendication 6, comprenant l'étape consistant à détecter la hauteur de la tête du passager, et dans lequel ladite hauteur déterminée est une hauteur optimale d'utilisation en fonction de la hauteur de la tête du passager.

17. Procédé selon la revendication 6 lorsqu'elle dépend de la revendication 3, comprenant les étapes consistant à déplacer l'appui-tête vers le haut lorsque les deux capteurs captent la présence du passager jusqu'à ce que le capteur du dessus ne capte plus cette présence et à déplacer l'appui-tête vers le bas lorsque qu'aucun des deux capteurs ne capte la présence du passager jusqu'à ce que le capteur du dessous détecte cette présence ou que l'appui-tête arrive en position basse de non utilisation.

18. Procédé selon l'une quelconque des revendications 6 à 17, dans lequel les différentes étapes sont répétées de façon cyclique.

19. Véhicule automobile, **caractérisé par le fait qu'**il comprend un appui-tête de siège selon l'une quelconque des revendications 1 à 5.
